# EUROPÄISCHE PATENTANMELDUNG

(11) **EP 0 835 682 A1**
(43) Veröffentlichungstag der Anmeldung: **15.04.1998**
(21) Anmeldenummer: 97114335.9
(22) Anmeldetag: 20.08.1997
(51) Int. Cl.: B01D 35/12, F01M 1/10

(54) **Filtersystem insbesondere für das Schmiermittel einer Brennkraftmaschine**

(30) Priorität: 13.09.1996 DE 19637299
(71) Anmelder: FILTERWERK MANN & HUMMEL GmbH, 71631 Ludwigsburg (DE)
(72) Erfinder: Dürrstein, Rolf, Dr., 74321 Bietigheim (DE); von Esebeck, Götz, Frhr. von, Dr., 10585 Berlin (DE); Ostertag, Robert, 75233 Tiefenbronn (DE); Reif, René, 73773 Aichwald (DE); Weindorf, Martin, 70806 Kornwestheim (DE)
(74) Vertreter: Voth, Gerhard, Dipl.-Ing.

(57) **Zusammenfassung**

Es wird ein Filtersystem inbesondere für das Schmiermittel einer Brennkraftmaschine vorgeschlagen. Dieses weist wenigstens zwei Filterelemente (19, 25) auf, welche nacheinander in den Ölkreislauf einschaltbar sind. Ferner ist ein Umschaltventil (21) vorgesehen, das das zu reinigende Öl zu einem der Filterelemente leitet, wobei das Schalten des Ventils (21) insbesondere durch den Differenzdruck zwischen der Reinölseite und der Rohölseite eines Filterelements (19, 25, 26) erfolgt.

## Beschreibung

Die Erfindung betrifft ein Filtersystem insbesondere für das Schmiermittel einer Brennkraftmaschine mit wenigstens zwei Filterelementen.

Aus dem US-PS 5 298 158 ist ein duales Filtersystem bekannt, bei dem zwei Filterelemente vorgesehen sind, wobei ein Filterelement als Vollstromfilter und das weitere Filterelement als Teilstromfilter ausgestattet ist. Das Teilstromfilterelement ist mit einem Ventil versehen, welches den Teilstrom auf einen bestimmten Wert reduziert. Damit werden beide Filter zwar mit unterschiedlichen Mengen an zu reinigender Flüssigkeit, jedoch grundsätzlich parallel durchströmt. Insbesondere bei der Anwendung solcher Filtersysteme an Brennkraftmaschinen entsteht durch das Schmiermittel eine sehr hohe thermische Belastung, die dazu führt, daß die Filterelemente nach einem gewissen Zeitraum ausgetauscht werden müssen. Dies erfordert einen erhöhten Wartungsaufwand sowie Kosten für die Austauschelemente.

Aus der DE 1 178 829 ist eine Umschaltvorrichtung für ein Doppelfilter zum Zu- bzw. Abschalten jedes einzelnen Filterelements bekannt. Die Umschaltung bewirkt gleichzeitig ein Spülen mit im Rückstrom geführten Spülfiltrat und ein Austragen des Schmutzes. Der Nachteil solcher Einrichtungen besteht darin, daß evtl. Schaltfehler auftreten können, die ungereinigtes Filtrat in den Reinflüssigkeitsbereich gelangen laßt. Dazu wird im Stand der Technik eine Umschaltvorrichtung vorgeschlagen, bei der die aus zwei Drehzylindern bestehende Umschaltvorrichtung mit Steuerschlitzen versehen ist. Hierdurch sollen Schaltfehler vermieden werden. Ein Nachteil des im Stand der Technik beschriebenen Filtersystems besteht jedoch darin, daß die manuelle Umschaltung ebenfalls einen erhöhten Wartungsaufwand erfordert. Außerdem ist der Bauteileaufwand zur Vermeidung von Schaltfehlern beträchtlich.

Der Erfindung liegt daher die Aufgabe zugrunde, ein Filtersystem insbesondere für das Schmiermittel einer Brennkraftmaschine zu schaffen, das zwei oder mehr Filterelemente aufweist und bei dem der Wartungsaufwand minimiert ist.

Diese Aufgabe wird durch die Merkmale des Hauptanspruchs gelöst.

Der wesentliche Vorteil der Erfindung besteht darin, daß die Filterelemente mit einem einfachen Umschaltventil nacheinander in den Ölkreislauf einschaltbar sind. Dieses Umschaltventil ist in einer vorteilhaft ausgestalteten Weise ein durch den Differenzdruck zwischen der Reinölseite und der Rohölseite eines Filterelements schaltbares Ventil, das eine automatische Umschaltung vornimmt, wenn das im Betrieb befindliche Filterelement seine maximale Schmutzaufnahmekapazität erreicht hat.

Die Erfindung hat außerdem den Vorteil, daß immer nur ein Filterelement in Betrieb ist und damit die hohen thermischen Belastungen während des Einsatzes auf das im Betrieb befindliche Filterelement begrenzt werden. Bereits bei der Anwendung zweier Filterelemente in einem Filtersystem wird durch den speziellen Betrieb der Filterelemente in dem Ölkreislauf die Lebensdauer verdoppelt. Die Anwendung weiterer Filterelemente erhöht die Standzeit entsprechend. der Anzahl der Filterelemente. Die Filterelemente bestehen aus einem zickzack-förmig gefalteten Filterpapier und sind damit kostengünstig herstellbar und in einfacher Weise thermisch zu entsorgen.

Eine Ausgestaltung der Erfindung liegt in der Verwendung eines Rastkolbenventils als Umschaltventil. Das Rastkolbenventil schaltet bei einem bestimmten Differenzdruck einen Schritt weiter und verharrt in dieser Raststellung, bis der Differenzdruck wieder einen Grenzwert überschreitet. Erst nachdem die Filterelemente nacheinander ihre Aufnahmekapazität erreicht haben, erfolgt ein Austausch sämtlicher Filterelemente und ein Zurückstellen des Rastkolbenventils.

Eine weitere vorteilhafte Ausgestaltung der Erfindung liegt in der Verwendung eines weiteren Ventils, welches thermisch gesteuert ist und unterhalb einer bestimmten Grenztemperatur den Rohölstrom zu einem zunächst unbeanspruchten Filterelement leitet. Da unterhalb der Grenztemperatur keine oder nur eine geringe thermische Belastung des Filterelements auftritt, besteht hier keine Gefahr, daß der Erschöpfungszustand frühzeitig erreicht wird.

Die Anwendung des Ventils hat den Vorteil, daß in der Warmlaufphase immer ein geringer Differenzdruck aufgrund der Verwendung des unbelasteten Filterelements vorherrscht und damit eine rasche und ausreichende Schmierung der Brennkraftmaschine in der Warmlaufphase sichergestellt ist. Eine weitere Ausgestaltung der Erfindung sieht vor, die Filterelemente mit

Rücklaufsperrventilen zu versehen. Diese verhindern ein Leerlaufen der Filterelemente und vermeiden damit Verzögerungen in der Ölversorgung beim Start der Brennkraftmaschine.

Außerdem kann ein ölkühler vorgesehen sein, der die Ölwärme an den Kühlwasserkreislauf oder die Umgebungsluft abgibt.

Es ist ferner von Vorteil, ein Filter- und/oder Kühlerumgehungsventil vorzusehen. Dieses absorbiert hohe Druckstöße, die sich unter Umständen schädlich auf die Filterelemente auswirken könnten.

Das Filtersystem kann bevorzugt in der Ölwanne angeordnet sein. Es besteht auch die Möglichkeit, das Filtersystem am Kurbelbehäuse anzuflanschen oder als separaten Behälter im Motorraum anzuordnen.

In das Filtersystem kann die Ölpumpe integriert sein. In einer vorteilhaften Ausgestaltung weist diese eine interne Abregelung auf.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt
- Figur 1: die Funktionsskizze eines Ölkreislaufs,
- Figur 2: die schematische Anordnung eines Filtersystems auf einem Systemträger,
- Figur 3a, b: die Detaildarstellung eines Rastierkolbenventils.

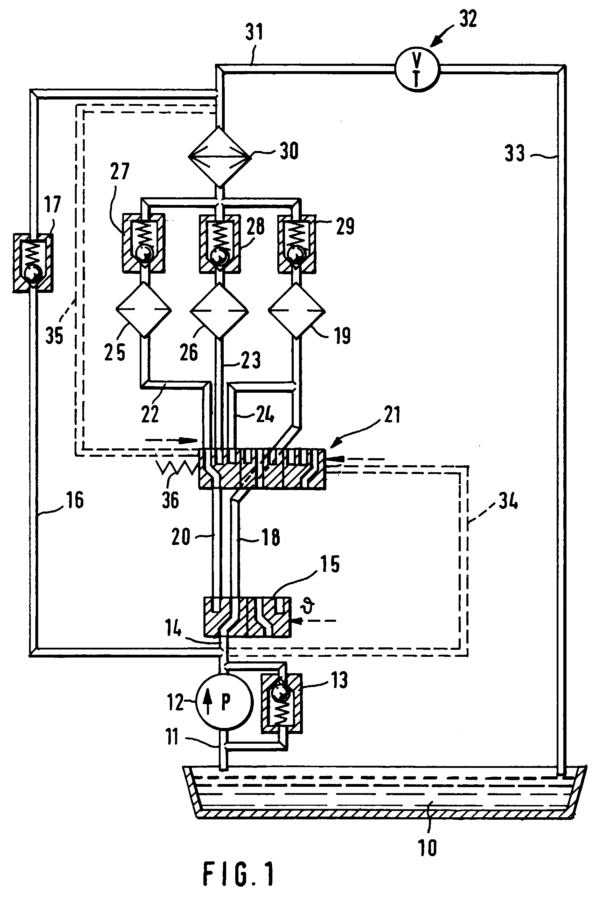

Die Funktionsskizze eines Ölkreislaufs gemäß Figur 1 zeigt eine Ölwanne 10, von welcher eine Leitung 11 zu einer Ölpumpe 12 führt. Die Ölpumpe 12 ist mit einem internen Abregelventil 13 versehen. Von der Ölpumpe ausgehend ist eine Leitung 14 zu einem Thermoventil 15 vorgesehen, ferner eine Umgehungsleitung 16 mit einem Umgehungsventil 17. Das Thermoventil 15 schaltet unterhalb einer Grenztemperatur von beispielsweise 80 ° C den von der Ölpumpe 12 geförderten Ölstrom über die Leitung 18 zu dem Filtersystem 19. Oberhalb der Grenztemperatur schaltet das Thermoventil 15 um, so daß die Leitung 14 mit der Leitung 20 verbunden ist. Die Leitung 20 führt zu einem Dreiwegerastierkolbenventil 21. Dieses Dreiwegerastierkolbenventil weist drei Ausgänge auf, die zu den Leitungen 22, 23, 24 führen. Die Leitung 22 ist mit dem Filtersystem 25 verbunden, die Leitung 23 mit dem Filtersystem 26 und die Leitung 24 mit dem Filtersystem 19. Jedes dieser Filtersysteme besteht aus einem Papierfilterelement, das in einem geeigneten Gehäuse angeordnet ist. Der Reinflüssigkeitsausgang jedes Filtersystems ist mit je einem Rücklaufsperrventil 27, 28, 29 verbunden. Die Ausgänge der Rücklaufsperrventile münden gemeinsam in einen Ölkühler 30, welcher beispielsweise mit dem Kühlmittel des Kühlmittelkreislaufs durchflossen wird und die Öltemperatur reduziert. Das gefilterte und gekühlte Öl verläßt den Ölkühler 20 über die Leitung 31 und gelangt zu den verschiedenen Motorschmierstellen 32 und von dort über die Leitung 33 zurück in die Ölwanne.

Das Dreiwegerastierkolbenventil 21 wird durch den Differenzdruck zwischen Rohölseite und Reinölseite gesteuert. Hierzu ist rohölseitig eine Leitung 34 und reinölseitig eine Leitung 35 vorgesehen. Sobald der Differenzdruck überhalb eines bestimmten Wertes steigt, schaltet der Rohöldruck entgegen der Federkraft der Feder 36 das Dreiwegerastierkolbenventil nach links in die nächste Raststellung.

In der in Fig. 1 gezeigten Stellung wird das Filtersystem 25 vom Schmiermittel bzw. vom Öl durchströmt. Sobald das Dreiwegerastierkolbenventil in die nächste Stellung umgeschaltet hat, wird das Filtersystem 26 durchströmt. Dies erfolgt dann, wenn die Schmutzaufnahmekapazität des Filterelements 25 erschöpft ist. Dieser Erschöpfungszustand macht sich in einem hohen Durchflußwiderstand bemerkbar.

Sofern auch das Filtersystem 26 erschöpft ist, schaltet das Dreiwegerastierkolbenventil weiter und leitet die Rohflüssigkeit zu dem Filtersystem 19. Erst nachdem dieses Filtersystem seine Schmutzaufnahmekapazität erreicht hat, ist ein Austausch der Filtersysteme und ein Rückstellen des Dreiwegerastierkolbenventils erforderlich.

Die einzelnen Filterpatronen werden so ausgelegt, daß nach der zulässigen Einsatzdauer ihre Schmutzspeicherkapazität erschöpft ist und über den Differenzdruck gesteuert das nächste Filter beaufschlagt wird. Somit kann man durch Vorsehen von mehreren Filtern, die erst dann automatisch gewechselt werden, wenn die Schmutzaufnahmekapazität erreicht ist, den Filterwartungsaufwand wesentlich reduzieren.

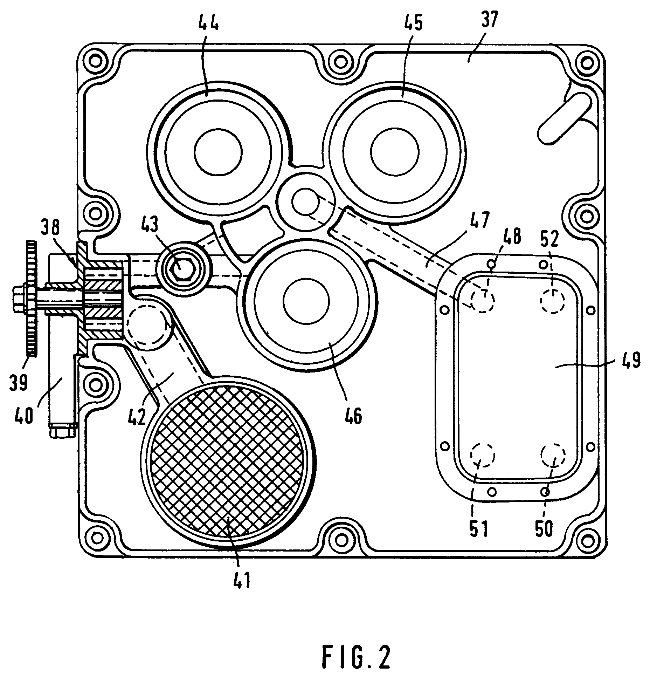

Figur 2 zeigt in einer schematischen Darstellung ein Anwendungsbeispiel und eine mögliche Integration eines solchen Dauerölfilters in einem Trockensumpfmodul, ein Behälter, in dem die Ölspeicherung, die Ansaugung und Förderung durch die Ölpumpe und die Kühlung und Filtration des Öles integriert sind. Hierzu ist auf einer Grundplatte 37 eine Außenzahnradpumpe 38 angeordnet. Diese wird über das Ritzel 39 angetrieben. An der Außenzahnradpumpe befindet sich ferner ein Abregelventil 40. Über ein Ansaugsieb 41 wird das zu reinigende Öl angesaugt und gelangt über den Kanal 42 zu der Außenzahnradpumpe 38. Von dort wird das geforderte Öl über ein Thermoventil 43 und ein hier nicht dargestelltes Dreiwegerastierkolbenventil zu einem der Filtersysteme 44, 45, 46 geführt. Das gereinigte Öl gelangt über den Reinölkanal 47 zu der Eintrittsöffnung 48 eines Ölwasserwärmetauschers 49 und verläßt diesen über den Anschluß 50. Der Ölwasserwärmetauscher ist mit einem Kühlflüssigkeitseintritt 51 und einem Kühlflüssigkeitsaustritt 52 versehen.

Das Filtersystem kann beispielsweise in der Ölwanne, seitlich am Kurbelgehäuse oder als separater Behälter im Motorraum angeordnet sein.

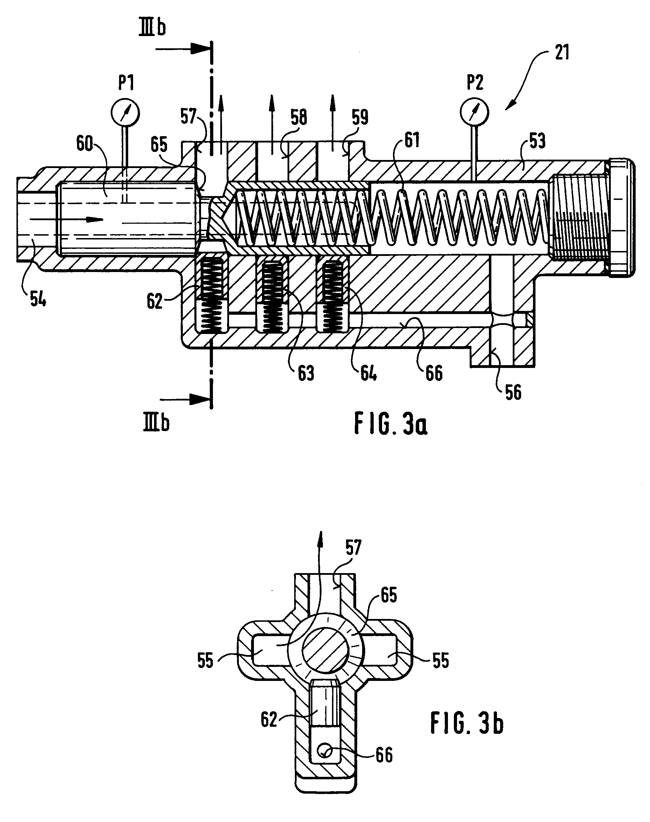

Figur 3 zeigt eine Teildarstellung eines Rastierkolbenventils 21. Das Ventil besteht aus einem Gehäuse 53, welches einen ersten Anschluß 54 für die in Figur 1 gezeigte Leitung 34 und einen zweiten Anschluß 56 für die in Figur 1 gezeigte Leitung 35 aufweist. Über die Leitung 54 steht der Rohöldruck vom Thermoventil an, über die Leitung 56 steht der Reinöldruck an.

Die Anschlüsse 57, 58, 59 sind mit den in Figur 1 gezeigten Filtersystemen 25, 26 und 19 verbunden.

In dem Gehäuse 53 ist ein Steuerkolben 60 angeordnet. Dieser wird über eine Druckfeder 61 in die linksseitige Stellung bewegt. Es sind ferner drei Rastierkolben 62, 63, 64 für den Steuerkolben 60 vorgesehen. In der dargestellten Stellung des Steuerkolbens 60 ist der Rastierkolben 62 in einer Aussparung 65 des Steuerkolbens 60 eingerastet.

Der über den Anschluß 56 zugeführte Reinölsteuerdruck gelangt über die Leitung 66 in den Bereich des Rastierkolbens 62 und bewirkt, daß der Rastierkolben in die Aussparung 65 des Steuerkolbens 60 gedrückt wird. Das über den Anschluß 54 zugeführte Öl gelangt über die vorgegossene Aussparung 55 in die ringförmige Aussparung 65 und von dort weiter zu dem Anschluß 57 und zum in Fig. 1 gezeigten Filtersystem 25.

Steigt aufgrund des Verschmutzungsgrades des Filtersystems 25 der Differenzdruck zwischen Rohölseite und Reinölseite an, so erzeugt der rohölseitige Druck p1 eine Verschiebung des Rastierkolbens 62 gegen die Federkraft und den reinölseitigen Druck p2 und eine Verschiebung des Steuerkolbens 60 nach rechts. Dies erfolgt so lange, bis der Rastierkolben 63 in die Aussparung 65 des Steuerkolbens 60 eingerastet ist und nunmehr das Rohöl zu dem Filtersystem 26 gemäß Figur 1 geleitet wird.

Ist auch dieses Filtersystem erschöpft und sinkt der reinölseitige Druck in Bezug auf den rohölseitigen Druck ab, dann bewirkt der rohölseitige Druck über den Anschluß 54 wiederum eine Verschiebung des Steuerkolbens nach rechts, bis dieser an dem Rastierkolben 64 einrastet und das Rohöl nunmehr zu dem Filtersystem 19 gelangen kann.

Ist auch das Filtersystem 19 erschöpft, müssen die Filtersysteme ausgewechselt und der Steuerkolben rückgestellt werden.

## Patentansprüche

1. Filtersystem insbesondere für das Schmiermittel einer Brennkraftmaschine mit wenigstens zwei Filterelementen (19, 25, 26), welche nacheinander in den Ölkreislauf einschaltbar sind und einem Umschaltventil (21), wobei das Umschaltventil das zu reinigende Öl zu einem der Filterelemente (19, 25, 26) leitet und wobei das Schalten des Ventils (21) durch den Differenzdruck zwischen der Reinölseite und der Rohölseite eines Filterelements (19, 25, 26) erfolgt.

2. Filtersystem nach Anspruch 1, dadurch gekennzeichnet, daß die Filterelemente (19, 25, 26) Hauptstromölfilterpatronen sind und zick-zack-förmig gefaltete Papierfilterelemente aufweisen.

3. Filtersystem nach Anspruch 1, dadurch gekennzeichnet, daß das Umschaltventil (21) ein Dreiwegerastierkolbenventil ist.

4. Filtersystem nach Anspruch 1, 2 oder 3, dadurch gekennzeichnet, daß ein weiteres Ventil (15) vorgesehen ist, welches unterhalb einer bestimmten Grenztemperatur den Rohölstrom zu dem am letzten eingesetzten Filterelement (26) leitet.

5. Filtersystem nach einem der vorherigen Ansprüche, dadurch gekennzeichnet, daß die Filterelemente (19, 25, 26) mit Rücklaufsperrventilen (27, 29) ausgestattet sind, daß den Filterelementen nachgeschaltet ein Ölkühler (30) vorgesehen ist, der die Olwärme an einen Kühlwasserkreislauf oder die Umgebungsluft abgibt.

6. Filtersystem nach einem der vorherigen Ansprüche, dadurch gekennzeichnet, daß ein Filter- und/oder Kühlerumgehungsventil (17) vorgesehen ist.

7. Filtersystem nach einem der vorherigen Ansprüche, dadurch gekennzeichnet, daß dieses in der Ölwanne (19), am Kurbelgehäuse angeflanscht oder als separater Behälter im Motorraum angeordnet ist.

8. Filtersystem nach Anspruch 7, dadurch gekennzeichnet, daß eine Ölpumpe (12) vorgeschaltet ist, welche eine interne Abregelung (13) aufweist.
